# EUROPEAN PATENT APPLICATION

(11) **EP 4 682 971 A1**
(43) Date of publication of application: **21.01.2026**
(21) Application number: 24788637.7
(22) Date of filing: 03.04.2024
(51) Int. Cl.: H01M 4/133, H01G 11/24, H01G 11/42, H01M 4/587, H01M 4/62

(54) **NEGATIVE ELECTRODE FOR POWER STORAGE ELEMENT AND POWER STORAGE ELEMENT**

(30) Priority: 14.04.2023 JP 2023066656
(71) Applicant: GS Yuasa International Ltd., Kyoto-shi, Kyoto 601-8520 (JP)
(72) Inventor: TAKANO Masashi, Kyoto-shi, Kyoto 601-8520 (JP); FURUYA Yasuyuki, Kyoto-shi, Kyoto 601-8520 (JP); HARINAGA Ukyo, Kyoto-shi, Kyoto 601-8520 (JP)
(74) Representative: Isarpatent
(86) International application number: PCT/JP2024/013738
(87) International publication number: WO 2024/214610

(57) **Abstract**

A negative electrode for an energy storage device according to an aspect of the present invention includes a negative electrode active material layer containing natural graphite particles and a binder, wherein the natural graphite particles have an internal porosity of not greater than 2%, the natural graphite particles have an average particle diameter of not less than 6 µm and not greater than 10 µm, the binder in the negative electrode active material layer has a content of not less than 0.1% by mass and not greater than 2.0% by mass, the binder is particulate, and a ratio (B/A) of an average particle diameter B of the binder to an average particle diameter A of the natural graphite particles is not less than 0.015 and not greater than 0.0375.

## Description

### TECHNICAL FIELD

The present invention relates to a negative electrode for an energy storage device and an energy storage device.

### BACKGROUND ART

Non-aqueous electrolyte secondary batteries, which are typified by lithium-ion secondary batteries, are frequently used in electronic devices such as personal computers and communication terminals, automobiles, and the like, because of high energy density thereof. The non-aqueous electrolyte secondary battery generally includes a pair of electrodes electrically isolated by a separator and a non-aqueous electrolyte interposed between the electrodes, and is configured to be charged and discharged through the transfer of charge-transporting ions between the two electrodes. As energy storage devices other than the non-aqueous electrolyte secondary battery, capacitors such as a lithium-ion capacitor and an electric double-layer capacitor, energy storage devices using an electrolyte other than a non-aqueous electrolyte, and the like are also widely adopted.

The energy storage device generally includes an electrode body in which a positive electrode containing a positive electrode active material and a negative electrode containing a negative electrode active material are stacked with a separator interposed therebetween. Such an electrode body is housed in a container together with an electrolyte to constitute an energy storage device. As the negative electrode active material, a carbon material such as graphite is widely used (see Patent Literature 1, etc.).

### CITATION LIST

### Patent Literature

Patent Literature 1: Japanese Unexamined Patent Application Publication No.

### DISCLOSURE OF INVENTION

### PROBLEMS TO BE SOLVED BY THE INVENTION

The energy storage device is required to have high energy (power: W) that can be taken in per unit time during charging, that is, high input (electric power) during charging.

The present invention has been made based on the circumstances described above, and an object thereof is to provide a negative electrode for an energy storage device capable of increasing an initial input of an energy storage device, and an energy storage device comprising such a negative electrode for an energy storage device.

### MEANS FOR SOLVING THE PROBLEMS

A negative electrode for an energy storage device according to an aspect of the present invention includes a negative electrode active material layer containing natural graphite particles and a binder, wherein the natural graphite particles have an internal porosity of not greater than 2%, the natural graphite particles have an average particle diameter of not less than 6 µm and not greater than 10 µm, the binder in the negative electrode active material layer has a content of not less than 0.1% by mass and not greater than 2.0% by mass, the binder is particulate, and a ratio (B/A) of an average particle diameter B of the binder to an average particle diameter A of the natural graphite particles is not less than 0.015 and not greater than 0.0375.

An energy storage device according to another aspect of the present invention includes the negative electrode for an energy storage device according to the aspect of the present invention.

### EFFECT OF THE INVENTION

The negative electrode for an energy storage device according to the aspect of the present invention can increase an initial input of the energy storage device.

The energy storage device according to another aspect of the present invention has a large initial input.

### BRIEF DESCRIPTION OF DRAWINGS

FIG. 1 is a see-through perspective view illustrating an embodiment of an energy storage device.
FIG. 2 is a schematic view illustrating an embodiment of an energy storage apparatus constituted by assembling a plurality of energy storage devices.

### DESCRIPTION OF EMBODIMENTS

First, an outline of a negative electrode for an energy storage device and an energy storage device disclosed in the present specification will be described.

[1] A negative electrode for an energy storage device according to an aspect of the present invention includes a negative electrode active material layer containing natural graphite particles and a binder, wherein the natural graphite particles have an internal porosity of not greater than 2%, the natural graphite particles have an average particle diameter of not less than 6 µm and not greater than 10 µm, the binder in the negative electrode active material layer has a content of not less than 0.1% by mass and not greater than 2.0% by mass, the binder is particulate, and a ratio (B/A) of the average particle diameter B of the binder relative to the average particle diameter A of the natural graphite particles is not less than 0.015 and not greater than 0.0375.

The negative electrode for an energy storage device according to the above [1] can increase an initial input of the energy storage device. Although the reason for this is not clear, the following reason is presumed. In general, natural graphite is a material that can easily achieve both procurement cost and output performance when used as a negative electrode active material. When natural graphite is used as a negative electrode active material, it is often processed so as to be rounded into a spherical shape, whereby internal voids are likely to be formed in natural graphite particles. When such natural graphite particles and a binder are used to prepare a negative electrode mixture, the binder enters the internal voids of the natural graphite particles, and thus the natural graphite particles cannot be appropriately bound to each other in some cases. In contrast, in the negative electrode for an energy storage device according to the above [1], since the natural graphite particles as the negative electrode active material have an internal porosity of not greater than 2%, there are few internal voids into which the binder can enter, and the binder can be easily disposed between the natural graphite particles. In addition, when the content of the binder is within the above range, the binder does not excessively coat the natural graphite particles while appropriately binding the natural graphite particles to each other, and thus it is easy to ensure sufficient electrical conductivity between the natural graphite particles. Furthermore, when the average particle diameter of the natural graphite particles is within the above range, the natural graphite particles have small internal voids, and the binder is less likely to be trapped in the internal voids. In addition, since the binder is particulate and the ratio (B/A) of the average particle diameter B of the binder relative to the average particle diameter A of the natural graphite particles is within the above range, the binder is less likely to be trapped in the internal voids of the natural graphite particles and can be easily disposed between the natural graphite particles. In addition, the natural graphite particles can be favorably bonded to each other. That is, in the negative electrode for an energy storage device, the binder is easily disposed between the natural graphite particles without excessively coating the natural graphite particles, and thus the natural graphite particles can be favorably bound to each other. Therefore, the negative electrode for an energy storage device according to the above [1] can increase the initial input of the energy storage device.

"Graphite" is a carbon material in which an average lattice spacing (d002) of a (002) plane is not less than 0.33 nm and less than 0.34 nm in an X-ray diffraction pattern using CuKα-ray, which is measured before charge and discharge or in a discharged state. Here, the "discharged state" of the carbon material means a state in which discharge is performed so that charge-transporting ions, which can be inserted and extracted during charge and discharge, are sufficiently extracted from the carbon material used as a negative electrode active material. For example, in a half-cell using a negative electrode containing the carbon material as a working electrode and metal Li as a counter electrode, an open circuit voltage is in a state of not less than 0.6 V.

In order to measure the X-ray diffraction, when the carbon material is prepared from the assembled energy storage device, specifically, a sample containing the carbon material in the discharged state can be prepared by the following method. First, the energy storage device is discharged at a constant current of 0.1 C to a discharge cut-off voltage during normal use. Here, the normal use is a case where the energy storage device is used by adopting a charge and discharge condition recommended or designated for the energy storage device. Thereafter, the energy storage device is disassembled, and the negative electrode is removed. A half-cell is assembled using the removed negative electrode as a working electrode and metal Li as a counter electrode. When the open circuit voltage of the half-cell is less than 0.6 V, the half-cell is discharged at a current of 0.1 C so that the open circuit voltage becomes not less than 0.6 V. The discharge in the half-cell refers to an oxidation reaction in which charge-transporting ions are extracted from a carbon material (graphite) that is a negative electrode active material. The half-cell is disassembled, and the negative electrode is removed, sufficiently washed with dimethyl carbonate, and then dried under reduced pressure at room temperature. Next, a powder of the negative electrode active material layer is collected from the negative electrode. The acquired powder of the negative electrode active material layer is used as a sample containing the carbon material for measuring the X-ray diffraction. Operations from disassembly of the energy storage device to collection of a sample containing the carbon material to be measured are carried out in a dry air atmosphere having a dew point of not greater than -40 °C, if necessary.

"Natural graphite" refers to graphite obtained from natural sources. Note that natural graphite particles having particle surfaces thereof coated with a material other than natural graphite are also regarded as natural graphite particles. In the X-ray diffraction pattern of natural graphite, four peaks appear at a diffraction angle 2θ in a range of 40° to 50°. These four peaks are considered to be two peaks derived from a hexagonal structure and two peaks derived from a rhombohedral structure. In a case of synthetic graphite, it is generally considered that only two peaks derived from a hexagonal structure appear. In the X-ray diffraction pattern, a ratio ((012)/(100)) of a peak intensity derived from a (012) plane relative to a peak intensity derived from a (100) plane is preferably not less than 0.3, and more preferably not less than 0.4. The peak intensity ratio ((012)/(100)) is preferably not greater than 0.6. Here, the (100) plane is derived from a hexagonal structure, and the (012) plane is derived from a rhombohedral structure.

The "internal porosity" of the natural graphite particles refers to a ratio of an area of voids within a particle to an area of the entire particle, in a cross-section (cross-sectional SEM image) of the natural graphite particle observed in an SEM image acquired by using a scanning electron microscope (SEM). The "internal porosity (the ratio of the area of voids within the particle to the area of the entire particle)" of the natural graphite particles can be determined by the following procedure.

### (1) Preparation of Measurement Sample

A negative electrode to be measured is fixed with a thermosetting resin. A cross section of the negative electrode fixed with the resin is exposed by an ion milling method, so that a measurement sample is produced. Note that when the negative electrode to be measured is included in the assembled energy storage device, the negative electrode is prepared by the following procedure, and the same applies hereinafter. The energy storage device is discharged at a constant current of 0.1 C to a discharge cut-off voltage during normal use to result in a discharged state. The energy storage device in the discharged state is disassembled, and the negative electrode is removed, sufficiently washed with dimethyl carbonate, and then dried under reduced pressure at room temperature. Operations from disassembly of the energy storage device to preparation of the negative electrode to be measured are carried out in a dry air atmosphere having a dew point of not greater than -40 °C.

### (2) Acquisition of Cross-Sectional SEM Image

In order to acquire a cross-sectional SEM image, JSM-7001F (manufactured by JEOL Ltd.) is used as a scanning electron microscope. As the cross-sectional SEM image, a secondary electron image is observed. An acceleration voltage is set to 15 kV. An observation magnification is set to a magnification at which the number of natural graphite particles appearing in one field of view is not less than 3 and not greater than 15. The acquired cross-sectional SEM image is stored as an image file. Other various conditions such as spot diameter, working distance, irradiation current, brightness, and focus are appropriately set so that contours of the natural graphite particles become clear.

### (3) Natural Graphite Particle Contour Cut-out

Contours of the natural graphite particles are cut out from the acquired cross-sectional SEM image using an image cut-out function of the image editing software Adobe Photoshop Elements 11. The contours are cut out by selecting the outside of the contours of natural graphite particles using a quick selection tool and editing the area other than the natural graphite particles to a black background. At this time, in a case where the number of natural graphite particles of which the contours can be cut out is less than three, the cross-sectional SEM image is acquired again, and the processing is continued until the number of natural graphite particles of which the contours can be cut out becomes not less than three.

### (4) Binarization Processing

The image of the first natural graphite particle among the cut-out natural graphite particles is subjected to binarization processing using image analysis software PopImaging 6.00 by setting a threshold value at a density that is 20% lower than the density at which the intensity is maximized. An area of the higher density side is calculated by the binarization processing to obtain an "area S1 of voids in the particle". Next, the image of the first natural graphite particle, which is the same as described above, is subjected to binarization processing with a threshold value of 10% in density. An outer edge of the natural graphite particle is determined by the binarization processing, and an area inside the outer edge is calculated as an "area S0 of the entire particle".

Using the calculated S1 and S0, a ratio (S 1/S0) of S1 to S0 is calculated, whereby, for the first natural graphite particle, a "ratio R1 of an area of voids within a particle to an area of the entire particle" is calculated.

Images of the second and subsequent natural graphite particles among the cut-out natural graphite particles are also subjected to the above-described binarization processing, and the areas S1 and S0 are calculated. Based on the calculated areas S1 and S0, for each natural graphite particle, ratios R2, R3,.... of the area of voids within the particle to the area of the entire particle are calculated.

### (5) Determination of Internal Porosity

For all the natural graphite particles calculated by the binarization processing, the "internal porosity" of the natural graphite particles is determined by calculating an average value of the ratios R1, R2, R3,.... of the area of voids within the particle to the area of the entire particle.

Instead of the scanning electron microscope used for the "acquisition of the cross-sectional SEM image", the image editing software used for the "cut-out of the natural graphite particle contours", and the image analysis software used for the "binarization processing", an apparatus, software, or the like capable of performing measurement, image editing, and image analysis equivalent thereto may be used.

The "average particle diameter" of the natural graphite particles refers to a value (median diameter) at which a volume-based cumulative distribution calculated in accordance with JIS-Z-8819-2 (2001) is 50% based on a particle diameter distribution measured by a laser diffraction/scattering method for a diluted solution obtained by diluting particles with a solvent in accordance with JIS-Z-8825 (2013). It has been confirmed that the median diameter based on the above measurement substantially coincides with an arithmetic mean value of the equivalent circle diameters measured by extracting 100 natural graphite particles, while avoiding extremely large natural graphite particles and extremely small natural graphite particles, in a cross-sectional SEM image of the negative electrode acquired by using a scanning electron microscope (SEM). The cross-sectional SEM image of the negative electrode is acquired by the procedures described in "(1) Preparation of Measurement Sample" and "(2) Acquisition of Cross-Sectional SEM Image" in the determination of the "internal porosity" of the natural graphite particles described above.

[2] In the negative electrode for an energy storage device according to the above [1], a content of the binder in the negative electrode active material layer may be less than 1.0% by mass.

In the negative electrode for an energy storage device according to the above [2], since a content of the binder in the negative electrode active material layer is less than the above upper limit, an input retention rate during charge and discharge cycles can be increased. Although the reason for this is not clear, the following reason is presumed. In general, the binder is likely to swell when immersed in the electrolyte. On the other hand, when the content of the binder in the negative electrode active material layer is less than the above upper limit, a coating amount of the binder on the natural graphite particles can be maintained in an appropriate range even when the binder swells. For this reason, an increase in resistance on the surface of the natural graphite particles is reduced, and the input retention rate during charge and discharge cycles can be increased.

[3] In the negative electrode for an energy storage device according to the above [1] or [2], the ratio (B/A) of the average particle diameter B of the binder to the average particle diameter A of the natural graphite particles may be not less than 0.018 and not greater than 0.030.

In the negative electrode for an energy storage device according to the above [3], since the ratio (B/A) of the average particle diameter B of the binder to the average particle diameter A of the natural graphite particles is within the above range, the binder is less likely to be trapped in the internal voids of the natural graphite particles, and can be more easily disposed between the natural graphite particles. In addition, the natural graphite particles can be more favorably bonded to each other.

The "average particle diameter" of the binder refers to an arithmetic mean value of equivalent circle diameters, measured by extracting 100 particles while avoiding extremely large binder particles and extremely small binder particles, in a surface SEM image of the negative electrode acquired by using a scanning electron microscope (SEM). For the acquisition of the surface SEM image of the negative electrode, JSM-7001F (manufactured by JEOL Ltd.) is used as a scanning electron microscope. As the surface SEM image, a secondary electron image is observed. An acceleration voltage is 5 kV. An observation magnification is set to a magnification at which the number of natural graphite particles appearing in one field of view is not less than 3 and not greater than 15. The acquired surface SEM image is stored as an image file. Other various conditions such as spot diameter, working distance, irradiation current, brightness, and focus are appropriately set so that contours of the binder particles become clear.

[4] In the negative electrode for an energy storage device according to any one of the above [1] to [3], the binder may have an average particle diameter of not less than 150 nm and not greater than 225 nm.

In the negative electrode for an energy storage device according to the above [4], since the average particle diameter of the binder is within the above range, the binder is less likely to be trapped in the internal voids of the natural graphite particles and can be more easily disposed between the natural graphite particles. In addition, the natural graphite particles can be more favorably bonded to each other.

[5] In the negative electrode for an energy storage device according to any one of the above [1] to [4], an average aspect ratio of particles of the binder may be not greater than 1.5.

In the negative electrode for an energy storage device according to the above [5], since the average aspect ratio of the binder particles is not greater than the upper limit, the natural graphite particles can be more favorably bound to each other. The "average aspect ratio of the binder particles" refers to an arithmetic mean value of T/Y values, which are ratios of a longest major axis T of the binder particles to a longest minor axis Y in a direction perpendicular to the major axis T, as measured by extracting 10 particles, while avoiding extremely large binder particles and extremely small binder particles, in a surface SEM image of the negative electrode acquired by using a scanning electron microscope (SEM). The surface SEM image of the negative electrode is acquired by the same procedure as the SEM image when the average particle diameter of the binder is obtained.

[6] An energy storage device according to an other aspect of the present invention includes the negative electrode for an energy storage device according to any one of the above [1] to [5].

The energy storage device according to the above [6], which includes the negative electrode for an energy storage device according to any one of the above [1] to [5], has a large initial input.

Hereinafter, a negative electrode for an energy storage device, an energy storage device, an energy storage apparatus, a method for manufacturing an energy storage device according to an embodiment of the present invention, and other embodiments will be described in detail. The names of the constituent members (components) used in the embodiments may be different from the names of the constituent members (components) used in the background art.

### [Negative Electrode for Energy Storage Device]

A negative electrode for an energy storage device according to an embodiment of the present invention (hereinafter, also simply referred to as a "negative electrode") includes a negative electrode substrate and a negative electrode active material layer that is disposed on the negative electrode substrate directly or via an intermediate layer. The negative electrode is used as a negative electrode of, for example, a non-aqueous electrolyte secondary battery such as a lithium-ion secondary battery, an other non-aqueous electrolyte energy storage device, and an energy storage device using an electrolyte other than a non-aqueous electrolyte. The negative electrode is suitable as a negative electrode of a non-aqueous electrolyte energy storage device.

### (Negative Electrode Substrate)

The negative electrode substrate has conductivity. The presence or absence of "conductivity" is determined using a volume resistivity of 10⁻² Ω·cm measured in accordance with JIS-H-0505 (1975) as a threshold value. As a material for the negative electrode substrate, a metal such as copper, nickel, stainless steel, or nickel-plated steel, an alloy thereof, a carbonaceous material, or the like, is used. Among them, copper or a copper alloy is preferable. Examples of the negative electrode substrate include a foil, a vapor-deposited film, a mesh, and a porous material; and a foil is preferable from the viewpoint of cost. Therefore, the negative electrode substrate is preferably a copper foil or a copper alloy foil. Examples of copper foils include a rolled copper foil and an electrolytic copper foil.

An average thickness of the negative electrode substrate is preferably not less than 2 µm and not greater than 35 µm, more preferably not less than 3 µm and not greater than 30 µm, further preferably not less than 4 µm and not greater than 25 µm, particularly preferably not less than 5 µm and not greater than 20 µm. By setting the average thickness of the negative electrode substrate within the above range, energy density per unit volume of the energy storage device can be increased while increasing strength of the negative electrode substrate.

### (Intermediate Layer)

The intermediate layer is a layer disposed between the negative electrode substrate and the negative electrode active material layer. The intermediate layer reduces contact resistance between the negative electrode substrate and the negative electrode active material layer by containing a conductive agent such as carbon particles. The configuration of the intermediate layer is not particularly limited, and includes, for example, a binder and a conductive agent. The binder and the conductive agent in the intermediate layer may be the same as the binder and the conductive agent in the negative electrode active material layer to be described below.

### (Negative Electrode Active Material Layer)

The negative electrode active material layer contains natural graphite particles and a binder. The negative electrode active material layer contains, if necessary, optional components such as a negative electrode active material other than the natural graphite particles, a conductive agent, a thickener, and a filler.

The natural graphite particles are a component that functions as a negative electrode active material. The type of the natural graphite particles is not particularly limited, and examples thereof include scaly graphite, massive graphite (flake graphite), earthy graphite, and the like. The type of the natural graphite particles is preferably flake graphite or massive graphite, and more preferably flake graphite, from the viewpoint of ensuring crystallinity. The natural graphite particles may be graphite particles obtained by spheroidizing flake graphite and subjecting the flake graphite to a compaction treatment. As the natural graphite particles, one kind of the above-described natural graphite particles may be used alone, or two or more kinds thereof may be used in combination. The surface of the natural graphite particle may be coated with a carbon material (for example, non-graphitic carbon) other than the natural graphite particle. The coating of the carbon material can be performed, for example, by coating the surface of the natural graphite particle with pitch, followed by firing.

An upper limit of the internal porosity of the natural graphite particles is 2%, preferably 1.5%, and more preferably 1%. When the internal porosity of the natural graphite particles is not greater than the above upper limit, the binder is easily disposed between the natural graphite particles, and the initial input can be increased. A lower limit of the internal porosity of the natural graphite particles is not particularly limited, but may be 0.1% from the viewpoint of manufacturability. The internal porosity of the natural graphite particles may be not less than any of the lower limits described above and not greater than any of the upper limits described above. The internal porosity of the natural graphite particles can be adjusted by, for example, compacting the natural graphite particles.

A lower limit of the average particle diameter of the natural graphite particles is 6 µm, preferably 6.5 µm, and more preferably 7 µm. On the other hand, an upper limit of the average particle diameter of the natural graphite particles is 10 µm, and is preferably 9 µm or 8 µm in some cases. When the average particle diameter of the natural graphite particles is not less than the above lower limit, the binder can be prevented from excessively coating the surface of the natural graphite particles, and thus the initial input can be increased. When the average particle diameter of the natural graphite particles is not greater than the above upper limit, the internal voids of the natural graphite particles are small, and the binder is less likely to be trapped in the internal voids. That is, even with a small amount of the binder, the binder is easily disposed between the natural graphite particles, and the initial input can be increased. An example of a method for obtaining natural graphite particles with a predetermined particle diameter includes pulverizing a natural graphite material with a pulverizer, a classifier, or the like. An example of a pulverization method includes a method using a mortar, a ball mill, a sand mill, a vibrating ball mill, a planetary ball mill, a jet mill, an opposed jet mill, a spiral airflow jet mill, a sieve, or the like. At the time of pulverization, wet pulverization in the presence of water or an organic solvent such as hexane can also be used. As a classification method, a sieve, an air classifier, or the like, is used as necessary in both a dry method and a wet method.

A content of the natural graphite particles in the negative electrode active material layer is preferably not less than 60% by mass and not greater than 99.5% by mass, more preferably not less than 80% by mass and not greater than 99% by mass, and still more preferably not less than 90% by mass and not greater than 99% by mass. By setting the content of the natural graphite particles within the above range, both high energy density and manufacturability of the negative electrode active material layer can be achieved, and the initial input can be further increased.

The negative electrode active material may contain a negative electrode active material other than the natural graphite particles. Examples of negative electrode active materials other than the natural graphite particles include metal Li; metals or metalloids such as Si and Sn; metal oxides or metalloid oxides such as Si oxide, Ti oxide, and Sn oxide; titanium-containing oxides such as Li₄Ti₅O₁₂, LiTiO₂, and TiNb₂O₇; polyphosphate compounds; silicon carbide; carbon materials such as synthetic graphite and non-graphitic carbons; and the like. The "non-graphitic carbon" refers to a carbon material having an average lattice spacing (d002) of the (002) plane of not less than 0.34 nm and not greater than 0.42 nm in the X-ray diffraction pattern described above. However, natural graphite particles are preferably the main negative electrode active material. For example, in the cross-sectional SEM image of the negative electrode, a ratio of an area occupied by natural graphite particles relative to an area occupied by all negative electrode active materials (an area occupied by natural graphite particles/an area occupied by all negative electrode active materials) is preferably not less than 90%, more preferably not less than 99%, and may be substantially 100%. The cross-sectional SEM image of the negative electrode is acquired in the same manner as the SEM image when determining the "internal porosity (the ratio of the area of voids within the particle to the area of the entire particle)" of the natural graphite particles. The area occupied by the negative electrode active material is defined as the area of an entire particle of the negative electrode active material (the area including internal voids). The ratio of the area occupied by the natural graphite particles relative to the area occupied by all the negative electrode active materials (the area occupied by the natural graphite particles/the area occupied by all the negative electrode active materials) is obtained using a cross-sectional SEM image in which 10 or more particles of the negative electrode active material are included in one field of view. The content of natural graphite particles in all the negative electrode active materials contained in the negative electrode active material layer is preferably not less than 90% by mass, more preferably not less than 99% by mass, and may be substantially 100% by mass. That is, it is particularly preferable that only natural graphite particles are used as the negative electrode active material. As described above, by mainly using the natural graphite particles as the negative electrode active material, the initial input becomes larger.

A content of all the negative electrode active materials in the negative electrode active material layer is preferably not less than 60% by mass and not greater than 99.5% by mass, more preferably not less than 80% by mass and not greater than 99% by mass, and still more preferably not less than 90% by mass and not greater than 99% by mass. By setting the content of all the negative electrode active materials within the above range, both high energy density and manufacturability of the negative electrode active material layer can be achieved.

Examples of the binder include thermoplastic resins such as fluororesins (polytetrafluoroethylene (PTFE), polyvinylidene fluoride (PVDF), etc.), polyethylene, polypropylene, polyacrylate, and polyimide; elastomers such as ethylene-propylene-diene rubber (EPDM), sulfonated EPDM, styrene-butadiene rubber (SBR), and fluoro-rubber; and polysaccharide polymers. Among these, SBR is preferable from the viewpoint of high flexibility and easy binding of natural graphite particles.

The binder is particulate. A lower limit of the average particle diameter of the binder is preferably 150 nm, more preferably 160 nm, and still more preferably 170 nm. On the other hand, an upper limit of the average particle diameter of the binder is preferably 225 nm, more preferably 210 nm, and still more preferably 200 nm. When the average particle diameter of the binder is not less than the above lower limit, the binder is less likely to be trapped in the internal voids of the natural graphite particles, and can be more easily disposed between the natural graphite particles. In addition, when the average particle diameter of the binder is not greater than the above upper limit, a binding property of the binder between the natural graphite particles is easily enhanced. The average particle diameter of the binder may be not less than any of the lower limits described above and not greater than any of the upper limits described above.

A lower limit of the ratio (B/A) of the average particle diameter B of the binder to the average particle diameter A of the natural graphite particles is 0.015, preferably 0.018, more preferably 0.020, and still more preferably 0.022. An upper limit of the above ratio (B/A) is 0.0375, preferably 0.035, more preferably 0.030, and still more preferably 0,028. When the ratio (B/A) is not less than the above lower limit, the binder can be more easily disposed between the natural graphite particles. In addition, when the ratio (B/A) is not greater than the above upper limit, the binding property of the binder between the natural graphite particles is easily enhanced. The ratio (B/A) may be not less than any of the lower limits described above and not greater than any of the upper limits described above.

The average aspect ratio of the binder particles is preferably not greater than 1.5, more preferably not greater than 1.4, still more preferably not greater than 1.3, and yet still more preferably not greater than 1.2. When the average aspect ratio of the binder particles is not greater than the above upper limit, the binding property of the binder between the natural graphite particles is easily enhanced.

A lower limit of the content of the binder in the negative electrode active material layer is 0.1% by mass, preferably 0.3% by mass, and more preferably 0.5% by mass. On the other hand, an upper limit of the content of the binder in the negative electrode active material layer is 2.0% by mass, preferably 1.5% by mass, and more preferably 1.0% by mass. When the content of the binder in the negative electrode active material layer is not less than the above lower limit, the natural graphite particles can be easily bound to each other. In addition, when the content of the binder in the negative electrode active material layer is not greater than the above upper limit, the natural graphite particles are not excessively coated, and thus the conductivity between the natural graphite particles is easily secured. That is, the initial input of the energy storage device can be increased. Furthermore, the upper limit of the content of the binder in the negative electrode active material layer is more preferably less than 1.0% by mass, still more preferably 0.8% by mass, and particularly preferably 0.6% by mass in some cases, from the viewpoint of increasing the input retention rate during charge and discharge cycles of the energy storage device. The content of the binder in the negative electrode active material layer may be not less than any of the lower limits described above and not greater than any of the upper limits described above. The content of the binder in the negative electrode active material layer is grasped from the amount of mass loss when the binder contained in the negative electrode active material layer is thermally decomposed by using a thermogravimetric differential thermal (TG/DTA) analyzer.

The conductive agent is not particularly limited as long as it is a material having conductivity. Examples of such conductive agents include carbonaceous materials, metals, and conductive ceramics. Examples of carbonaceous materials include graphite, non-graphitic carbon, graphene-based carbon, and the like. Examples of non-graphitic carbons include carbon nanofibers, pitch-based carbon fibers, carbon black, and the like. Examples of carbon blacks include furnace black, acetylene black, ketjen black, and the like. Examples of graphene-based carbons include graphene, a carbon nanotube (CNT), fullerene, and the like. However, the natural graphite particles contained in the negative electrode active material layer are not included in the conductive agent. Examples of shapes of the conductive agent include powder, fiber, and the like. As the conductive agent, one kind of these materials may be used alone, or two or more kinds thereof may be used in combination. Further, these materials may be used in combination. For example, a composite material of carbon black and CNT may be used. Among these, carbon black is preferable from the viewpoint of electron conductivity and coatability, and acetylene black is particularly preferable.

A content of the conductive agent in the negative electrode active material layer is preferably not less than 1% by mass and not greater than 10% by mass, and more preferably not less than 2% by mass and not greater than 9% by mass. By setting the content of the conductive agent within the above range, the energy density of the energy storage device can be increased. In an embodiment of the present invention, it may be preferable that the conductive agent is not contained in the negative electrode active material layer.

The thickener is not particularly limited. Examples of thickeners include a polymer that can be dissolved or dispersed in an aqueous solvent. Examples of such polymers include polysaccharide polymers such as carboxymethyl cellulose (CMC) and methyl cellulose. When the thickener has a functional group that reacts with lithium or the like, this functional group may be deactivated in advance by methylation or the like. A content of the thickener in the negative electrode active material layer is preferably not less than 0.1% by mass and not greater than 5% by mass, more preferably not less than 0.5% by mass and not greater than 3% by mass. As used herein, the thickener refers to a thickener having a viscosity of not less than 400 mPa·s in an aqueous solution prepared by dissolving or dispersing 1 part by mass of the thickener in 99 parts by mass of water (aqueous solution containing 1% by mass of the thickener). The viscosity is measured by using a B-type viscometer under measurement conditions of a rotational speed of 60 rpm and a temperature of 25 °C. Such a thickener is not included in the binder.

The filler is not particularly limited. Examples of fillers include polyolefins such as polypropylene and polyethylene; inorganic oxides such as silicon dioxide, alumina, titanium dioxide, calcium oxide, strontium oxide, barium oxide, magnesium oxide, and aluminosilicate; hydroxides such as magnesium hydroxide, calcium hydroxide, and aluminum hydroxide; carbonates such as calcium carbonate; sparingly soluble ionic crystals such as calcium fluoride, barium fluoride, and barium sulfate; nitrides such as aluminum nitride and silicon nitride; substances derived from mineral resources such as talc, montmorillonite, boehmite, zeolite, apatite, kaolin, mullite, spinel, olivine, sericite, bentonite, and mica; or synthetic substances thereof. In an embodiment of the present invention, it may be preferable that the filler is not contained in the negative electrode active material layer.

The negative electrode active material layer may contain typical non-metal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Ta, Hf, Nb, and W as components other than the negative electrode active material, the conductive agent, the binder, the thickener, and the filler.

### [Energy Storage Device]

An energy storage device according to an embodiment of the present invention includes an electrode body including a positive electrode, a negative electrode, and a separator, an electrolyte, and a container that houses the electrode body and the electrolyte. The electrode body is usually a stacked type in which a plurality of positive electrodes and a plurality of negative electrodes are stacked with separators interposed therebetween, or a wound type in which positive electrodes and negative electrodes are wound in a state of being stacked with separators interposed therebetween. The electrolyte is present in a state contained in the positive electrode, the negative electrode, and the separator. As an example of the energy storage device, a lithium-ion secondary battery will be described. The negative electrode included in the energy storage device according to an embodiment of the present invention may be the same as the above-described negative electrode. Therefore, the positive electrode, the separator, and the electrolyte will be described below.

### <Positive Electrode>

The positive electrode includes a positive electrode substrate and a positive electrode active material layer disposed on the positive electrode substrate directly or via an intermediate layer.

The positive electrode substrate has conductivity. As a material for the positive electrode substrate, a metal such as aluminum, titanium, tantalum, or stainless steel, or an alloy thereof is used. Among them, aluminum or an aluminum alloy is preferable from the viewpoint of potential resistance, high electrical conductivity, and cost. Examples of the positive electrode substrate include a foil, a vapor-deposited film, a mesh, and a porous material, and a foil is preferable from the viewpoint of cost. Therefore, the positive electrode substrate is preferably an aluminum foil or an aluminum alloy foil. Examples of aluminum and aluminum alloys include A1085, A3003, A1N30, and the like specified in JIS-H-4000 (2014) or JIS-H-4160 (2006).

An average thickness of the positive electrode substrate is preferably not less than 3 µm and not greater than 50 µm, more preferably not less than 5 µm and not greater than 40 µm, still more preferably not less than 8 µm and not greater than 30 µm, and particularly preferably not less than 10 µm and not greater than 25 µm. By setting the average thickness of the positive electrode substrate within the above range, the energy density per unit volume of the energy storage device can be increased while increasing strength of the positive electrode substrate.

The intermediate layer is a layer disposed between the positive electrode substrate and the positive electrode active material layer. The intermediate layer contains a conductive agent such as carbon particles, thereby reducing contact resistance between the positive electrode substrate and the positive electrode active material layer. The configuration of the intermediate layer is not particularly limited, and includes, for example, a binder and a conductive agent.

The positive electrode active material layer includes a positive electrode active material. The positive electrode active material layer contains optional components such as a conductive agent, a binder, a thickener, and a filler, as necessary. Optional components such as a conductive agent, a binder, a thickener, and a filler can be selected from the materials exemplified above for the negative electrode.

The positive electrode active material can be appropriately selected from any known positive electrode active materials. As the positive electrode active material for a lithium-ion secondary battery, a material capable of inserting and extracting lithium ions is usually used. Examples of positive electrode active materials include lithium transition metal composite oxides having an α-NaFeO₂ crystal structure, lithium transition metal composite oxides having a spinel-type crystal structure, polyanionic compounds, chalcogen compounds, and sulfurs. Examples of lithium transition metal composite oxides having an α-NaFeO₂ crystal structure include Li[LiₓNi₍₁₋ₓ₎]O₂ (0 ≤ x < 0.5), Li[LiₓNi_{γ}Co_{(1-x-γ)}]O₂ (0 ≤ x < 0.5, 0 < γ < 1, 0 < 1 - x - γ), Li[LiₓCo₍₁₋ₓ₎]O₂ (0 ≤ x < 0.5), Li[LiₓNi_{γ}Mn_{(1-x-γ)}]O₂ (0 ≤ x < 0.5, 0 < γ < 1, 0 < 1 - x - γ), and Li[LiₓNi_{γ}MnpCo_{(1-x-γ-β)}]O₂ (0 ≤ x < 0.5, 0 < γ, 0 < β, 0.5 < γ + β < 1, 0 < 1 - x - γ - β), Li[LiₓNi_{γ}Co_{β}Al_{(1-x-γ-β)}]O₂ (0 ≤ x < 0.5, 0 < γ, 0 < β, 0.5 < γ + β < 1, 0 < 1 - x - γ - β), and the like. Examples of lithium transition metal composite oxides having a spinel-type crystal structure include LiₓMn₂O₄, LiₓNi_{γ}Mn(_{2-γ})O₄, and the like. Examples of polyanionic compounds include LiFePO₄, LiMnPO₄, LiNiPO₄, LiCoPO₄, Li₃V₂(PO₄)₃, Li₂MnSiO₄, Li₂CoPO₄F, and the like. Examples of chalcogen compounds include titanium disulfide, molybdenum disulfide, molybdenum dioxide, and the like. The atoms or polyanions in these materials may be partially substituted with atoms or anionic species of other elements. The surfaces of these materials may be coated with other materials. In the positive electrode active material layer, one kind of these materials may be used alone, or two or more kinds thereof may be used in combination.

The positive electrode active material is usually in the form of particles (powder). An average particle size of the positive electrode active material is preferably, for example, not less than 0.1 µm and not greater than 20 µm. When the average particle size of the positive electrode active material is set to not less than the above lower limit, the positive electrode active material is easily manufactured or handled. When the average particle size of the positive electrode active material is not greater than the above upper limit, the electron conductivity of the positive electrode active material layer improves. When a composite of a positive electrode active material and another material is used, an average particle size of the composite is defined as the average particle size of the positive electrode active material. The "average particle size" of the positive electrode active material means a value at which a volume-based cumulative distribution calculated in accordance with JIS-Z-8819-2 (2001) is 50%, based on a particle size distribution measured by a laser diffraction/scattering method applied to a diluted solution obtained by diluting particles with a solvent in accordance with JIS-Z-8825 (2013). The pulverization method and the classification method can be selected from, for example, the methods exemplified for the negative electrode described above.

A content of the positive electrode active material in the positive electrode active material layer is preferably not less than 50% by mass and not greater than 99% by mass, more preferably not less than 70% by mass and not greater than 98% by mass, and still more preferably not less than 80% by mass and not greater than 95% by mass. By setting the content of the positive electrode active material within the above range, both high energy density and manufacturability of the positive electrode active material layer can be achieved.

A content of the conductive agent in the positive electrode active material layer is preferably not less than 1% by mass and not greater than 10% by mass, and more preferably not less than 3% by mass and not greater than 9% by mass. By setting the content of the conductive agent within the above range, the energy density of the energy storage device can be increased.

A content of the binder in the positive electrode active material layer is preferably not less than 1% by mass and not greater than 10% by mass, and more preferably not less than 3% by mass and not greater than 9% by mass. By setting the content of the binder within the above range, the positive electrode active material can be stably held.

Examples of thickeners include polysaccharide polymers such as carboxymethyl cellulose (CMC) and methyl cellulose. When the thickener has a functional group that reacts with lithium or the like, this functional group may be deactivated in advance by methylation or the like.

The positive electrode active material layer may contain typical non-metal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Nb, and W, as components other than the positive electrode active material, the conductive agent, the binder, the thickener, and the filler.

### <Separator>

The separator can be appropriately selected from known separators. As the separator, for example, a separator formed of only a substrate layer, a separator in which a heat-resistant layer containing heat-resistant particles and a binder is formed on one surface or both surfaces of a substrate layer, or the like, can be used. Examples of shapes of the substrate layer of the separator include a woven fabric, a nonwoven fabric, a porous resin film, and the like. Among these shapes, a porous resin film is preferable from the viewpoint of strength, and a nonwoven fabric is preferable from the viewpoint of liquid retainability of electrolyte. As materials for the substrate layer of the separator, for example, polyolefins such as polyethylene and polypropylene are preferable from the viewpoint of a shutdown function, and for example, polyimide, aramid, and the like, are preferable from the viewpoint of oxidative decomposition resistance. A composite material of these resins may be used as the substrate layer of the separator.

Heat-resistant particles contained in the heat-resistant layer preferably have a mass loss of not greater than 5% when heated from room temperature to 500 °C in an air atmosphere at 1 atmosphere, and more preferably have a mass loss of not greater than 5% when heated from room temperature to 800 °C. Examples of materials having a mass loss of not greater than a predetermined amount include inorganic compounds. Examples of inorganic compounds include oxides such as iron oxide, silicon oxide, aluminum oxide, titanium oxide, zirconium oxide, calcium oxide, strontium oxide, barium oxide, magnesium oxide, aluminosilicates; nitrides such as aluminum nitride and silicon nitride; carbonates such as calcium carbonate; sulfates such as barium sulfate; sparingly soluble ionic crystals such as calcium fluoride, barium fluoride, and barium titanate; covalent crystals such as silicon and diamond; substances derived from mineral resources such as talc, montmorillonite, boehmite, zeolite, apatite, kaolin, mullite, spinel, olivine, sericite, bentonite, and mica; or synthetic substances thereof. As the inorganic compound, a single substance or a composite of these materials may be used alone, and two or more kinds thereof may also be used in combination. Among these inorganic compounds, silicon oxide, aluminum oxide, or aluminosilicate is preferable from the viewpoint of safety of the energy storage device.

The porosity of the separator is preferably not greater than 80% by volume from the viewpoint of strength, and is preferably not less than 20% by volume from the viewpoint of discharge performance. Here, the "porosity" is a value based on volume, and means a value measured by a mercury porosimeter.

As the separator, a polymer gel composed of a polymer and an electrolyte may be used. Examples of polymers include polyacrylonitrile; polyethylene oxide; polypropylene oxide; polymethyl methacrylate; polyvinyl acetate; polyvinylpyrrolidone, and polyvinylidene fluoride. The use of the polymer gel has an effect of suppressing liquid leakage. As the separator, the above-described porous resin film or nonwoven fabric may be used in combination with the polymer gel.

### <Electrolyte>

As the electrolyte, a non-aqueous electrolyte may be used, and for example, a non-aqueous electrolyte solution may be used. The non-aqueous electrolyte solution contains a non-aqueous solvent and an electrolyte salt dissolved in this non-aqueous solvent.

The non-aqueous solvent can be appropriately selected from known non-aqueous solvents. Examples of non-aqueous solvents include cyclic carbonates, chain carbonates, carboxylic acid esters, phosphoric acid esters, sulfonic acid esters, ethers, amides, nitriles, and the like. As the non-aqueous solvent, those obtained by substituting a part of hydrogen atoms contained in these compounds with halogen may be used.

Examples of cyclic carbonates include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, 1,2-diphenylvinylene carbonate, and the like. Among these, EC is preferable.

Examples of chain carbonates include diethyl carbonate (DEC), dimethyl carbonate (DMC), ethyl methyl carbonate (EMC), diphenyl carbonate, trifluoroethyl methyl carbonate, bis(trifluoroethyl) carbonate, and the like. Among these, EMC is preferable.

As the non-aqueous solvent, a cyclic carbonate or a chain carbonate is preferably used, and a cyclic carbonate and a chain carbonate are more preferably used in combination. By using the cyclic carbonate, dissociation of the electrolyte salt can be promoted to improve ionic conductivity of the non-aqueous electrolyte solution. By using the chain carbonate, viscosity of the non-aqueous electrolyte solution can be suppressed to be low. When a cyclic carbonate and a chain carbonate are used in combination, a volume ratio of the cyclic carbonate to the chain carbonate (cyclic carbonate: chain carbonate) is preferably set, for example, within a range of 5:95 to 50:50.

The electrolyte salt can be appropriately selected from known electrolyte salts. Examples of electrolyte salts include a lithium salt, a sodium salt, a potassium salt, a magnesium salt, an onium salt, and the like. Among these, a lithium salt is preferable.

Examples of lithium salts include: inorganic lithium salts such as LiPF₆, LiPO₂F₂, LiBF₄, LiClO₄, and LiN(SO₂F)₂; lithium oxalate salts such as lithium bis(oxalate) borate (LiBOB), lithium difluorooxalate borate (LiFOB); lithium bis(oxalate) difluorophosphate (LiFOP); lithium salts having halogenated hydrocarbon groups such as LiSO₃CF₃, LiN(SO₂CF₃)₂, LiN(SO₂C₂F₅)₂, LiN(SO₂CF₃)(SO₂C₄F₉), LiC(SO₂CF₃)₃, LiC(SO₂C₂F₅)₃; and the like. Among these, inorganic lithium salts are preferable, and LiPF₆ is more preferable.

A content of the electrolyte salt in the non-aqueous electrolyte solution is preferably not less than 0.1 mol/dm³ and not greater than 2.5 mol/dm³, more preferably not less than 0.3 mol/dm³ and not greater than 2.0 mol/dm³, still more preferably not less than 0.5 mol/dm³ and not greater than 1.7 mol/dm³, and particularly preferably not less than 0.7 mol/dm³ and not greater than 1.5 mol/dm³, at 20 °C and 1 atmosphere. By setting the content of the electrolyte salt within the above range, the ionic conductivity of the non-aqueous electrolyte solution can be enhanced.

The non-aqueous electrolyte solution may contain an additive in addition to the non-aqueous solvent and the electrolyte salt. Examples of additives include halogenated carbonate esters such as fluoroethylene carbonate (FEC) and difluoroethylene carbonate (DFEC); oxalate salts such as lithium bis(oxalato)borate (LiBOB), lithium difluoro(oxalato)borate (LiFOB), and lithium bis(oxalato)difluorophosphate (LiFOP); imide salts such as lithium bis(fluorosulfonyl)imide (LiFSI); aromatic compounds such as biphenyl, alkylbiphenyl, terphenyl, partially hydrogenated terphenyl, cyclohexylbenzene, t-butylbenzene, t-amylbenzene, diphenyl ether, and dibenzofuran; partially halogenated derivatives of the above aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methyl vinylene carbonate, ethyl vinylene carbonate, succinic anhydride, glutaric anhydride, maleic anhydride, citraconic anhydride, glutaconic anhydride, itaconic anhydride, and cyclohexanedicarboxylic anhydride; and ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethyl sulfoxide, diethyl sulfoxide, tetramethylene sulfoxide, diphenyl sulfide, 4,4'-bis(2,2-dioxo-1,3,2-dioxathiolane), 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tris(trimethylsilyl)borate, tris(trimethylsilyl)phosphate, tetrakis(trimethylsilyl)titanate, lithium monofluorophosphate, and lithium difluorophosphate. One kind of these additives may be used alone, or two or more kinds thereof may be used in combination.

A content of the additive contained in the non-aqueous electrolyte solution is preferably not less than 0.01% by mass and not greater than 10% by mass, more preferably not less than 0.1% by mass and not greater than 7% by mass, still more preferably not less than 0.2% by mass and not greater than 5% by mass, and particularly preferably not less than 0.3% by mass and not greater than 3% by mass, with respect to the entire mass of the non-aqueous electrolyte solution. By setting the content of the additive within the above range, the capacity retention performance or cycle performance after high-temperature storage can be improved, and the safety can be further improved.

As the non-aqueous electrolyte, a solid electrolyte may be used, or a non-aqueous electrolyte solution and a solid electrolyte may be used in combination.

The solid electrolyte can be selected from any material having ionic conductivity, such as lithium, sodium, and calcium, which is solid at room temperature (for example, 15 °C to 25 °C). Examples of the solid electrolyte include a sulfide solid electrolyte, an oxide solid electrolyte, a nitride solid electrolyte, a polymer solid electrolyte, and the like.

In the case of a lithium-ion secondary battery, examples of sulfide solid electrolytes include Li₂S-P₂S₅, LiI-Li₂S-P₂S₅, Li₁₀Ge-P₂S₁₂, and the like.

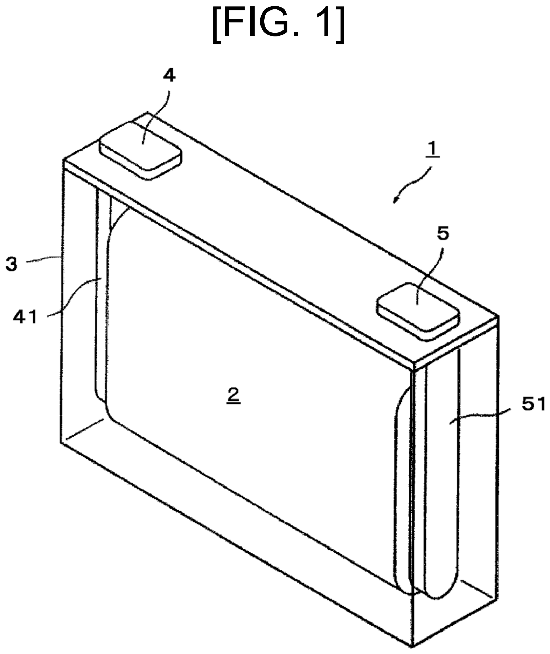

The shape of the energy storage device according to the present embodiment is not particularly limited, and examples thereof include a cylindrical battery, a prismatic battery, a flat-type battery, a coin battery, a button battery, and the like. FIG. 1 illustrates an energy storage device 1 as an example of a prismatic battery. The figure is a see-through perspective view of the inside of the container. An electrode body 2 having a positive electrode and a negative electrode wound with a separator interposed therebetween is housed in a square-type container 3. The positive electrode is electrically connected to a positive electrode terminal 4 via a positive electrode lead 41. The negative electrode is electrically connected to a negative electrode terminal 5 via a negative electrode lead 51.

### [Energy Storage Apparatus]

The energy storage device according to the present embodiment can be mounted as an energy storage unit (battery module) configured by assembling a plurality of energy storage devices in a power source for an automobile such as an electric vehicle (EV), a hybrid electric vehicle (HEV), or a plug-in hybrid electric vehicle (PHEV), a power source for an electronic device such as a personal computer or a communication terminal, a power source for energy storage, or the like. In this case, the technique according to the present invention may be applied to at least one energy storage device included in the energy storage unit.

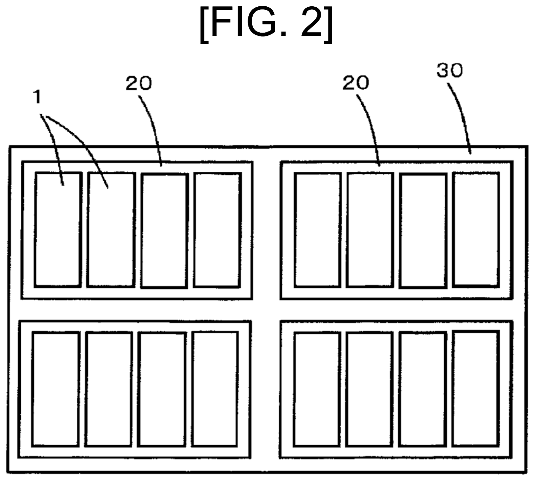

FIG. 2 illustrates an example of an energy storage apparatus 30 in which energy storage units 20 in each of which two or more electrically connected energy storage devices 1 are assembled are further assembled. The energy storage apparatus 30 may include a bus bar (not illustrated) that electrically connects two or more energy storage devices 1, a bus bar (not illustrated) that electrically connects two or more energy storage units 20, and the like. The energy storage unit 20 or the energy storage apparatus 30 may include a state monitoring device (not illustrated) that monitors a state of one or more energy storage devices.

### [Method for Manufacturing Energy Storage Device]

The method for manufacturing the energy storage device according to the present embodiment can be appropriately selected from known methods. The manufacturing method includes, for example, preparing an electrode body, preparing an electrolyte, and housing the electrode body and the electrolyte in a container. Preparing the electrode body includes preparing a positive electrode and a negative electrode, and forming the electrode body by stacking or winding the positive electrode and the negative electrode with a separator interposed therebetween.

Housing the electrolyte in the container can be appropriately selected from known methods. For example, when a non-aqueous electrolyte solution is used as the electrolyte, the non-aqueous electrolyte solution may be injected from an injection port formed in the container, and then the injection port may be sealed.

### [Other Embodiments]

The energy storage device according to the present invention is not limited to the above-described embodiment, and various modifications may be made without departing from the scope of the present invention. For example, a configuration of another embodiment can be added to the configuration of one embodiment, or a part of the configuration of one embodiment can be replaced with the configuration of another embodiment or with well-known technology. Further, a part of the configuration of one embodiment can be deleted. Well-known technology can also be added to the configuration of one embodiment.

In the above embodiment, the case where the energy storage device is used as a chargeable and dischargeable lithium-ion secondary battery has been described. However, the type, shape, size, capacity, and the like of the energy storage device are arbitrary. The present invention can also be applied to non-aqueous electrolyte energy storage devices, such as various secondary batteries and capacitors including electric double-layer capacitors and lithium-ion capacitors, or to energy storage devices using electrolytes other than non-aqueous electrolytes.

In the above embodiment, the electrode body in which the positive electrode and the negative electrode are stacked with the separator interposed therebetween has been described, but the electrode body may not include the separator. For example, the positive electrode and the negative electrode may be in direct contact with each other in a state where a non-conductive layer is formed over the active material layer of the positive electrode or the negative electrode.

### EXAMPLES

Hereinafter, the present invention will be described in more detail with reference to examples. The present invention is not limited to the following examples.

### [Example 1]

### <Production of Negative Electrode>

Natural graphite particles were used as the negative electrode active material. The natural graphite particles are spherical graphite particles obtained by spheroidizing flake graphite and subjecting the spheroidized flake graphite to a compaction treatment. The natural graphite particles had an average particle diameter A of 10.0 µm and an internal porosity of 1%.

A negative electrode mixture paste containing the above negative electrode active material, styrene-butadiene rubber (SBR) as a binder, and carboxymethyl cellulose (CMC) as a thickener at a mass ratio (in terms of solid content) of 97.0:2.0:1.0, and containing water as a dispersion medium was prepared. In the following examples and comparative examples, when the negative electrode mixture paste was prepared by changing the content of the binder, the negative electrode mixture paste was prepared so that the total content (in terms of solid content) of the negative electrode active material and the binder in the negative electrode mixture paste was 99.0% by mass. The above negative electrode mixture paste was applied to both surfaces of a copper foil as a negative electrode substrate, dried, and then pressed to produce a negative electrode in which a negative electrode active material layer was disposed on the negative electrode substrate. The average particle diameter B of the above binder was 200 nm, and the aspect ratio was 1.0.

### <Production of Energy Storage Device>

### (Production of Positive Electrode)

A lithium transition metal composite oxide having an α-NaFeO₂ crystal structure and represented by LiNi_{0.6}Co_{0.2}Mn_{0.2}O₂ was used as the positive electrode active material. A positive electrode mixture paste containing the above positive electrode active material, acetylene black (AB) as a conductive agent, and polyvinylidene fluoride (PVDF) as a binder at a mass ratio (in terms of solid content) of 93.0:4.0:3.0, and containing N-methylpyrrolidone (NMP) as a dispersion medium was prepared. The above positive electrode mixture paste was applied to both surfaces of an aluminum foil as a positive electrode substrate, dried, and then pressed to produce a positive electrode in which a positive electrode active material layer was disposed on the positive electrode substrate.

### (Preparation of Non-aqueous Electrolyte Solution)

A non-aqueous electrolyte solution was prepared by dissolving LiPF₆ at a concentration of 1.0 mol/dm³ (at 20 °C and 1 atmosphere) in a mixed solvent obtained by mixing ethylene carbonate (EC), dimethyl carbonate (DMC), and ethyl methyl carbonate (EMC) in a volumetric ratio of 30:35:35.

### (Production of Energy Storage Device)

The above positive electrode and the above negative electrode were stacked with a polyolefin microporous membrane as a separator interposed therebetween to produce an electrode body. This electrode body was housed in a container made of a metal-resin composite film, the above non-aqueous electrolyte solution was injected into the container, and the container was then sealed by thermal welding, thereby obtaining an energy storage device of Example 1.

### [Comparative Example 1, Examples 2 to 5]

Energy storage devices of Comparative Example 1 and Embodiment Examples 2 to 5 were obtained in the same procedure as in Example 1, except that the content of the binder (SBR) in the negative electrode active material layer was set as illustrated in Table 1. The content of CMC in each example was fixed to 1% by mass, and the total of the content of the negative electrode active material, the content of SBR, and the content of CMC was adjusted to 100% by mass. The same applies hereinafter.

### [Comparative Examples 2 to 6]

As the negative electrode active material, natural graphite particles different from those in Example 1 were used. The natural graphite particles are spherical graphite particles obtained by spheroidizing flake graphite and not subjecting the spheroidized flake graphite to a compaction treatment. The above natural graphite particles had an average particle diameter A of 9.7 µm and an internal porosity of 10%. Energy storage devices of Comparative Examples 2 to 6 were obtained in the same procedure as in Example 1, except that the above negative electrode active material was used and the content of the binder (SBR) in the negative electrode active material layer was set as illustrated in Table 1.

### [Example 6]

As the negative electrode active material, natural graphite particles different from those in Example 1 were used. The natural graphite particles are spherical graphite particles obtained by spheroidizing flake graphite and subjecting the spheroidized flake graphite to a compaction treatment. The natural graphite particles had an average particle diameter A of 8.1 µm and an internal porosity of 1%. An energy storage device of Example 6 was obtained in the same procedure as in Example 1, except that the above negative electrode active material was used and the content of the binder (SBR) in the negative electrode active material layer was set as illustrated in Table 2.

### [Comparative Example 7]

Synthetic graphite particles having an average particle diameter A of 2.8 µm and an internal porosity of 1% were used as the negative electrode active material. An energy storage device of Comparative Example 7 was obtained in the same procedure as in Example 1, except that the above negative electrode active material was used and the content of the binder (SBR) in the negative electrode active material layer was set as illustrated in Table 2.

### [Comparative Example 8]

As the negative electrode active material, natural graphite particles different from those in Example 1 were used. The natural graphite particles are spherical graphite particles obtained by spheroidizing flake graphite and subjecting the spheroidized flake graphite to a compaction treatment. The natural graphite particles had an average particle diameter A of 15.0 µm and an internal porosity of 1%. An energy storage device of Comparative Example 8 was obtained in the same manner as in Example 1 except that the above-mentioned negative electrode active material was used and the content of the binder (SBR) in the negative electrode active material layer was set as illustrated in Table 2.

### [Comparative Example 9]

An energy storage device of Comparative Example 9 was obtained in the same procedure as in Example 6, except that the average particle diameter B of the binder (SBR) in the negative electrode active material layer was set as illustrated in Table 2.

### [Examples 7 to 9]

Energy storage devices of Examples 7 to 9 were obtained in the same procedure as in Example 1, except that the content of the binder (SBR) in the negative electrode active material layer was set as illustrated in Table 3.

### [Evaluation]

### (Execution of Initial Charge and Discharge)

Each of the energy storage devices was initially charged and discharged at 25 °C in the following manner.

Constant-current constant-voltage charging was performed at a charging current of 0.2 C and a charge cut-off voltage of 4.1 V. The condition for terminating charging was set such that the charging current reached 0.02 C. This was followed by a rest period of 10 minutes. Thereafter, constant-current discharging was performed at a discharge current of 0.2 C and a discharge cut-off voltage of 3.0 V. The discharge capacity at this time was defined as an "initial discharge capacity".

### (Measurement of Initial Input)

After the initial charge and discharge, the initial input has been measured in the following manner.

In a thermostatic chamber at 25 °C, constant-current charging was performed at a charging current of 1.0 C to adjust an SOC thereof to 50%. After the energy storage device is stored in a thermostatic chamber at -30 °C for 4 hours, charging was performed at a constant current of 5 C, 10 C, 15 C, 20 C, or 25 C for 10 seconds. The "State of Charge" (SOC) refers to a state of charge of an energy storage device with reference to a rated capacity measured in a voltage range in which the energy storage device is normally used. In this example, the rated capacity was the initial discharge capacity. After completion of each charging, constant-current discharging was performed at a current of 1.0 C to bring the SOC to 50%. A resistance value was calculated from the slope of the current in each charging and the voltage one second after the start of charging, and "{difference between voltage before charging and upper limit voltage (4.3 V)}/resistance value × upper limit voltage (4.3 V)" was obtained and used as an initial input. The input is energy (power) that can be taken in per unit time. Measurement results of the initial input are illustrated in Tables 1 and 2 as "initial input".

### (Charge-Discharge Cycle Test)

For the energy storage devices of Examples 7 to 9, after the measurement of the initial input, a charge-discharge cycle test was performed in the following manner.

In a thermostatic chamber at 60 °C, constant-current charging was performed with a charging current of 8 C and a charge cut-off voltage of 3.9 V. Thereafter, constant-current discharging was performed with a discharge current of 8C and a discharge cut-off voltage of 3.5 V. This charge and discharge was repeated for 1000 hours.

### (Measurement of Input After Charge-Discharge Cycle Test)

After the above charge-discharge cycle test, the input after the charge-discharge cycle test was measured by the same method as the measurement of the above initial input. The percentage of the input after the charge-discharge cycle test relative to the initial input of the energy storage devices of Examples 7 to 9 is illustrated in Table 3 as "input retention rate after cycling".

**[Table 1]**

| | Graphite internal porosity of not greater than 2% | SBR content [% by mass] | Graphite average particle diameter A [µm] | Particle diameter ratio (B/A) of SBR to Graphite | Initial input [W] |
|---|---|---|---|---|---|
| Comparative Example 1 | Yes | 3.0 | 10.0 | 0.0200 | 486 |
| Example 1 | Yes | 2.0 | 10.0 | 0.0200 | 507 |
| Example 2 | Yes | 1.5 | 10.0 | 0.0200 | 515 |
| Example 3 | Yes | 1.0 | 10.0 | 0.0200 | 540 |
| Example 4 | Yes | 0.8 | 10.0 | 0.0200 | 537 |
| Example 5 | Yes | 0.5 | 10.0 | 0.0200 | 539 |
| Comparative Example 2 | No | 4.0 | 9.7 | 0.0206 | 473 |
| Comparative Example 3 | No | 3.0 | 9.7 | 0.0206 | 486 |
| Comparative Example 4 | No | 2.1 | 9.7 | 0.0206 | 499 |
| Comparative Example 5 | No | 1.4 | 9.7 | 0.0206 | 493 |
| Comparative Example 6 | No | 1.0 | 9.7 | 0.0206 | 489 |

**[Table 2]**

| | Graphite internal porosity of not greater than 2% | SBR content [% by mass] | Graphite average particle diameter A [µm] | SBR average particle diameter B [nm] | SBR average aspect ratio | Particle diameter ratio (B/A) of SBR to Graphite | Initial input [W] |
|---|---|---|---|---|---|---|---|
| Example 6 | Yes | 1.0 | 8.1 | 200 | 1.0 | 0.0247 | 510 |
| Comparative Example 7 | Yes | 1.0 | 2.8 | 200 | 1.0 | 0.0714 | 412 |
| Comparative Example 8 | Yes | 1.0 | 15.0 | 200 | 1.0 | 0.0133 | 483 |
| Comparative Example 9 | Yes | 1.0 | 8.1 | 85 | 1.0 | 0.0105 | 473 |

**[Table 3]**

| | Graphite internal porosity of not greater than 2% | SBR content [% by mass] | Graphite average particle diameter A [µm] | Particle diameter ratio (B/A) of SBR to Graphite | Input retention rate after cycling [%] |
|---|---|---|---|---|---|
| Example 7 | Yes | 0.5 | 10 | 0.0200 | 96.9 |
| Example 8 | Yes | 0.8 | 10 | 0.0200 | 96.4 |
| Example 9 | Yes | 1.0 | 10 | 0.0200 | 94.2 |

As illustrated in Table 1, in all of Examples 1 to 5 and Comparative Examples 1 to 6, the average particle diameter of the natural graphite particles was not less than 6.0 µm and not greater than 10.0 µm, but in Comparative Examples 1 to 6, the initial input was less than 500 W, and in Examples 1 to 5, the initial input was not less than 500 W. In comparison between Comparative Example 1 and Examples 1 to 5, it is considered that in Examples 1 to 5, since the content of SBR is not less than 0.1% by mass and not greater than 2.0% by mass, the natural graphite particles are not excessively coated, and the initial input is increased. In comparison between Examples 1 to 5 and Comparative Examples 2 to 6, it is considered that in Comparative Examples 2 to 6, the SBR was trapped in the internal voids of the natural graphite particles to weaken the bonding between the natural graphite particles, whereas in Examples 1 to 5, the internal porosity was not greater than 2%, so that the SBR was not trapped in the internal voids of the natural graphite particles and was disposed so as to ensure sufficient electrical conductivity between the natural graphite particles.

In Comparative Examples 2 to 6, the initial input did not increase even when the content of SBR was not greater than 2.0% by mass, whereas in Examples 1 to 5, the initial input increased by setting the content of SBR to not less than 0.1% by mass and not greater than 2.0% by mass. That is, in the case of Comparative Examples 2 to 6, when the content of SBR is not less than 0.1% by mass and not greater than 2.0% by mass, an effect of optimizing the coating with SBR on the surface of natural graphite particles is canceled by an effect of weakening the binding between the natural graphite particles, whereas in the case of Examples 1 to 5, even when the content of SBR is not less than 0.1% by mass and not greater than 2.0% by mass, the effect of optimizing the coating with SBR on the surface of natural graphite particles while maintaining the binding between the natural graphite particles is effectively exhibited.

As illustrated in Table 2, Example 6 in which the average particle diameter of the natural graphite particles was not less than 6 µm and not greater than 10 µm had a higher initial input than Comparative Example 7, in which the average particle diameter of the natural graphite particles was less than 6 µm and Comparative Example 8, in which the average particle diameter of the natural graphite particles was more than 10 µm. This suggests that by maintaining the average particle diameter of the natural graphite particles in an appropriate range, whereby the SBR is likely to be disposed so as to improve the binding between the natural graphite particles. Example 6 in which the ratio (B/A) of the average particle diameter B of the binder to the average particle diameter A of the natural graphite particles was not less than 0.015 and not greater than 0.0375 had a higher initial input than Comparative Example 7, in which the ratio (B/A) was more than 0.0375 and Comparative Examples 8 and 9, in which the ratio (B/A) was less than 0.015. This suggests that by maintaining the ratio (B/A) of the average particle diameter B of the binder to the average particle diameter A of the natural graphite particles in an appropriate range, the SBR is likely to be disposed so as to improve the binding between the natural graphite particles.

From the above, it is considered that by such a synergistic action that the internal porosity of the natural graphite particles is not greater than 2%, the content of the binder (SBR) is not less than 0.1% by mass and not greater than 2.0% by mass, the average particle diameter of the natural graphite particles is not less than 6 µm and not greater than 10 µm, and the ratio (B/A) of the average particle diameter B of the binder to the average particle diameter A of the natural graphite particles is not less than 0.015 and not greater than 0.0375, the binder is easily disposed between the natural graphite particles without excessively coating the natural graphite particles, and thus the natural graphite particles can be favorably bound to each other.

As illustrated in Table 3, when the content of SBR was less than 1.0% by mass, the input retention rate after charge and discharge cycles could be increased. It is considered that by setting the content of the binder to less than 1.0% by mass, a coating amount of the binder on the natural graphite particles can be maintained in an appropriate range.

### INDUSTRIAL APPLICABILITY

The present invention can be applied to an energy storage device used as a power source for an electronic device such as a personal computer or a communication terminal, an automobile, or the like.

### DESCRIPTION OF REFERENCE NUMERALS

1 Energy storage device
2 Electrode body
3 Container
4 Positive electrode terminal
41 Positive electrode lead
5 Negative electrode terminal
51 Negative electrode lead
20 Energy storage unit
30 Energy storage apparatus

## Claims

1. A negative electrode for an energy storage device, comprising a negative electrode active material layer containing natural graphite particles and a binder, wherein
the natural graphite particles have an internal porosity of not greater than 2%, the natural graphite particles have an average particle diameter of not less than 6 µm and not greater than 10 µm,
the binder in the negative electrode active material layer has a content of not less than 0.1% by mass and not greater than 2.0% by mass, and
the binder is particulate, and a ratio (B/A) of an average particle diameter B of the binder to an average particle diameter A of the natural graphite particles is not less than 0.015 and not greater than 0.0375.

2. The negative electrode for an energy storage device according to claim 1, wherein the binder in the negative electrode active material layer has a content of less than 1.0% by mass.

3. The negative electrode for an energy storage device according to claim 1 or 2, wherein the ratio (B/A) of the average particle diameter B of the binder to the average particle diameter A of the natural graphite particles is not less than 0.018 and not greater than 0.030.

4. The negative electrode for an energy storage device according to claim 1 or 2, wherein the binder has an average particle diameter of not less than 150 nm and not greater than 225 nm.

5. The negative electrode for an energy storage device according to claim 1 or 2, wherein particles of the binder have an average aspect ratio of not greater than 1.5.

6. An energy storage device, comprising the negative electrode for an energy storage device according to claim 1 or 2.
